# EUROPEAN PATENT APPLICATION

(11) **EP 2 815 964 A1**
(43) Date of publication of application: **24.12.2014**
(21) Application number: 14168895.2
(22) Date of filing: 19.05.2014
(51) Int. Cl.: B64C 25/42, B64D 13/00

(54) **Active aircraft brake cooling system**

(30) Priority: 21.05.2013 US 201313898840
(71) Applicant: Hamilton Sundstrand Corporation, Windsor Locks, CT 06096-1010 (US)
(72) Inventor: Zywiak, Thomas M., Suffield, CT Connecticut 06078 (US); Anderson, Jr., David, Enfield, CT Connecticut 06082 (US)
(74) Representative: Leckey, David Herbert

(57) **Abstract**

An active aircraft brake cooling system (50) includes an air intake (60) and conditioning system (52) having an outlet portion (86) that is fluidically exposed to a landing gear bay (39; 42; 45).

## Description

### BACKGROUND OF THE INVENTION

Exemplary embodiments pertain to the art of aircraft systems and, more particularly, to an active aircraft brake cooling system.

Aircraft include landing gear that facilitates a transition between ground travel and air travel. In many cases the landing gear includes wheels and a braking system. On approach, the landing gear are deployed. Upon touch down, the braking system is activated generating frictional forces that slow the aircraft. The frictional forces generate heat. Conventional landing gear brake systems rely on passive cooling to mitigate the heat generated upon landing. Typical passive cooling systems include the use of radiation that allows generated heat to gradually dissipate, and the use of high temperature ceramics that are capable of withstanding the heat and which promote heat dissipation.

### BRIEF DESCRIPTION OF THE INVENTION

Disclosed is an active aircraft brake cooling system including an air intake and conditioning system having an outlet portion that is fluidically exposed to a landing gear bay.

Also disclosed is an aircraft including a fuselage having a body portion containing an aircraft cabin, a first wing and a second wing. At least one landing gear bay is arranged in one of the body portion, the first wing and the second wing. A landing gear assembly is arranged in the at least one landing gear bay. The landing gear assembly includes a landing gear braking system operatively associated with the landing gear assembly. The landing gear braking system includes at least one braking surface. An active aircraft brake cooling system includes an air intake and conditioning system having an outlet portion that is fluidically exposed to the landing gear bay.

Further disclosed is a method of actively cooling an aircraft braking system including directing a flow of air into a landing gear bay of the aircraft.

### BRIEF DESCRIPTION OF THE DRAWINGS

The following descriptions should not be considered limiting in any way. With reference to the accompanying drawings, like elements are numbered alike:
FIG. 1 is a perspective view of an aircraft having an active aircraft brake cooling system in accordance with an exemplary embodiment; and
FIG. 2 is a block diagram illustrating the active aircraft brake cooling system of FIG. 1.

### DETAILED DESCRIPTION OF THE INVENTION

A detailed description of one or more embodiments of the disclosed apparatus and method are presented herein by way of exemplification and not limitation with reference to the Figures.

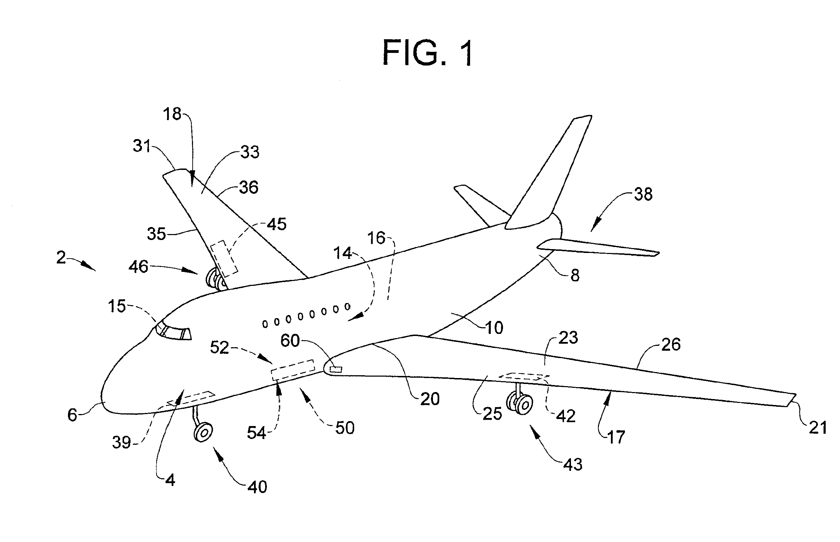

An aircraft, in accordance with an exemplary embodiment, is indicated generally at 2 in FIG. 1. Aircraft 2 includes a fuselage 4 extending from a nose portion 6 to a tail portion 8 through a body portion 10. Body portion 10 houses an aircraft cabin 14 that includes a crew compartment 15 and a passenger compartment 16. Body portion 10 supports a first wing 17 and a second wing 18. First wing 17 extends from a first root portion 20 to a first tip portion 21 through a first airfoil portion 23. First airfoil portion 23 includes a leading edge 25 and a trailing edge 26. Second wing 18 extends from a second root portion (not shown) to a second tip portion 31 through a second airfoil portion 33. Second airfoil portion 33 includes a leading edge 35 and a trailing edge 36. Tail portion 8 includes a stabilizer 38.

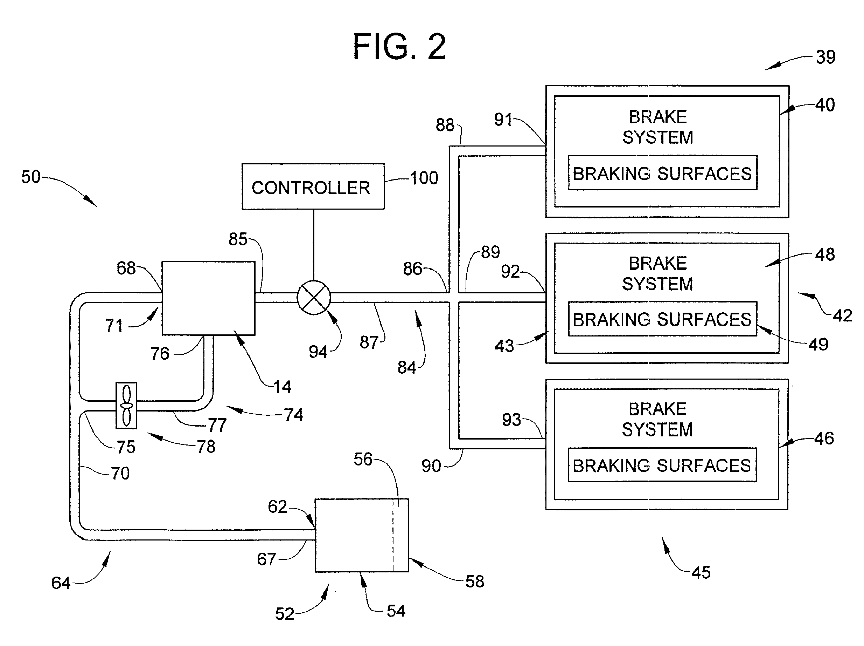

In the exemplary embodiment shown, aircraft 2 includes a first landing gear bay 39 arranged in nose portion 6. First landing gear bay 39 supports and houses a first landing gear assembly 40. A second landing gear bay 42 is provided in first wing 17. Second landing gear bay 42 supports and houses a second landing gear assembly 43. A third landing gear bay 45 is arranged in second wing 18. Third landing gear bay 45 supports and houses a third landing gear assembly 46. Second landing gear assembly 43 includes a corresponding brake system 48 having braking surfaces 49, such as shown schematically as boxes in FIG. 2. It should be understood that first and third landing gear assemblies 40 and 46 also include braking systems having braking surfaces (not separately labeled). In accordance with the exemplary embodiment, aircraft 2 includes an active aircraft brake cooling system 50 which, as will be detailed more fully below, directs a flow of air into first, second and third landing gear bays 39, 42, and 45 to cool respective ones of first, second and third landing gear assemblies 40, 43 and 46.

As shown in FIG. 2, active aircraft cooling system 50 includes an environmental control system (ECS) 52 mounted in body portion 10 of aircraft 2. ECS 52 includes a RAM air system 54 having a RAM air heat exchanger 56. RAM air heat exchanger 56 includes an inlet 58 that is fluidically connected to an intake 60 which, in the exemplary embodiment shown, is positioned near leading edge 25 of first wing 17 (FIG. 1). It should however be understood that intake 60 may be arranged in other locations. RAM air system 54 also includes an outlet 62 that delivers conditioned air to aircraft cabin 14 through a cabin air duct 64. More specifically, cabin air duct 64 extends from a first end 67, fluidically connected to outlet 62, to a second end 68 through an intermediate portion 70. Second end 68 defines a cabin air inlet portion 71 that is fluidically connected with, and delivers conditioned air to, aircraft cabin 14 (represented schematically as a box in FIG. 2). A recirculation duct 74 extends from a first end 75 to a second end 76 through an intermediate portion 77 having a fan 78. Fan 78 draws a portion of the conditioned air from aircraft cabin 14 back to intermediate portion 70 of cabin air duct 64.

A cabin air exhaust duct 84 extends from a first end portion 85 to a second end portion 86 through an intermediate portion 87. First end portion 85 is fluidically connected to aircraft cabin 14, and second end portion 86 feeds a first landing gear duct 88, a second landing gear duct 89, and a third landing gear duct 90. First landing gear duct 88 includes an outlet portion 91 that is fluidically exposed to first landing gear bay 39, second landing gear duct 89 includes a second outlet portion 92 that is fluidically exposed to second landing gear bay 42, and third landing gear duct 90 includes an outlet portion 93 that is fluidically exposed to third landing gear bay 45. It should be understood that while shown as extending directly between aircraft cabin 14 and first, second and third landing gear bays 39, 42 and 45, cabin air exhaust duct 84 may guide cabin exhaust air through other upstream aircraft spaces, such as one or more cargo bays (not shown).

Cabin air exhaust duct 84 includes a valve 94 arranged in intermediate portion 87. Valve 94 is operatively connected to a controller 100. Controller 100 is selectively activated to open valve 94 during ascent to enable cabin exhaust air to flow into first, second and third landing gear bays 39, 42 and 45 to deliver cooling air onto each landing gear assembly 40, 43 and 46. Controller 100 may be automatically activated, such as during ascent, or may be activated based on signals received from sensors, such as temperature sensors (not shown) arranged at one or more of landing gear assemblies 40, 43, and 46. During ascent, a pressure differential between the cabin air and ambient drives the cooling air into first, second and third landing gear bays 39, 42 and 45. In accordance with an aspect of the exemplary embodiment, the cooling air flows onto braking surfaces 49 of second landing gear assembly 43 as well as braking surfaces (not separately labeled) associated with first landing gear assembly 40 and third landing gear assembly 46.

At this point it should be understood that the exemplary embodiments present an active aircraft brake cooling system that delivers cooling air onto landing gear braking surface to enhance braking performance and to reduce ground time, e.g., time between flights, lower maintenance intervals and costs as well as enable the use of lower cost braking materials. It should also be understood that the cooling air may be guided into the braking surfaces in the landing gear bays, the cooling air may also be directed at known hot spots on the braking surface as well as other portions of the landing gear assemblies. Further, while described as using cabin air pressure differential during ascent to drive the cooling air into the landing gear bays, cooling air may be introduced into the landing gear bays during all phases of flight. Moreover, other systems, including forced air injection, may also be used to guide cooling air into the landing gear bays.

While the invention has been described with reference to an exemplary embodiment or embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the claims.

## Claims

1. An aircraft (2) comprising:
a fuselage (4) including a body portion (10) having an aircraft cabin (14), a first wing (17) and a second wing (18);
at least one landing gear bay (39; 42; 45) arranged in one of the body portion (10; 17; 18), the first wing and the second wing;
a landing gear assembly (40; 43; 46) arranged in the at least one landing gear bay (39; 42; 45), the landing gear assembly (40; 43; 46) including a brake system (48) operatively associated with the landing gear assembly (40; 43; 46), the brake system (48) including at least one braking surface; and
an active aircraft brake cooling system (50) including an air intake (60) and conditioning system (52) having an outlet portion (86) that is fluidically exposed to the landing gear bay (39; 42; 45).

2. The aircraft according to claim 1, wherein the outlet portion is configured and disposed to guide a flow of air toward braking surfaces (49) of a brake system (48) in the landing gear bay (39; 42; 45).

3. The aircraft according to claim 1 or 2, wherein the air intake (60) and conditioning system includes an environmental control system (ECS) (52) having a RAM air system (54) provided with a RAM air heat exchanger (56).

4. The aircraft according to claim 3, wherein the environmental control system (ECS) (52) includes an inlet (60) and an outlet (62) fluidically connected to the outlet portion (88).

5. The aircraft according to any preceding claim, wherein the air intake (60) and conditioning system includes a cabin air exhaust duct (84) that extends from a first end portion (85) to a second end portion (86) that defines the outlet portion.

6. The aircraft according to claim 5, further comprising a valve (94) fluidically connected in the cabin air exhaust duct (84), the valve (94) being selectively activated to deliver cabin exhaust air toward into the landing gear bay (39; 42; 45).

7. The aircraft according to claim 6, further comprising a controller (100) operatively connected to the valve (94), the controller (100) being configured and disposed to open the valve (94) allowing cabin exhaust air to flow into the landing gear bay (39; 42; 45) during ascent.

8. A method of actively cooling an aircraft braking system (48) comprising:
directing a flow of air into a landing gear bay (39; 42; 45) of the aircraft (2).

9. The method of claim 8, wherein directing the flow of air includes passing an airflow through a RAM air system (54) into an aircraft cabin (14).

10. The method of claim 9, wherein directing the flow of air includes passing cabin exhaust air from the aircraft cabin (14) through a cabin air exhaust duct (84) into the landing gear bay (39; 42; 45).

11. The method of claim 10, further comprising selectively opening a valve (94) fluidically connected in the cabin air exhaust duct (84).

12. The method of any of claims 8 to 11, wherein directing the airflow includes guiding the flow of air into the landing gear bay (39; 42; 45) during ascent.

13. The method of any of claims 8 to 12, wherein directing the airflow includes passing the flow of air toward braking surfaces (49) of a brake system (48) in the landing gear bay (39; 42; 45).

14. The method of any of claims 8 to 13, further comprising conditioning the flow of air prior to introduction into the landing gear bay (39; 42; 45).
